# EUROPÄISCHE PATENTSCHRIFT

(11) **EP 2 531 081 B1**
(45) Veröffentlichungstag und Bekanntmachung des Hinweises auf die Patenterteilung: **08.01.2014**
(21) Anmeldenummer: 10709379.1
(22) Anmeldetag: 04.02.2010
(51) Int. Cl.: A47J 31/44

(54) **ELEKTRISCHER KAFFEEVOLLAUTOMAT**
AUTOMATIC COFFEE MACHINE
MACHINE À CAFÉ AUTOMATIQUE

(43) Veröffentlichungstag der Anmeldung: 12.12.2012
(73) Patentinhaber: Severin Elektrogeräte GmbH, 59846 Sundern (DE)
(72) Erfinder: KROESEN, Klaus, 46509 Xanten (DE)
(74) Vertreter: Köchling, Conrad-Joachim
(86) Internationale Anmeldenummer: PCT/DE2010/075011
(87) Internationale Veröffentlichungsnummer: WO 2011/095147

(56) Entgegenhaltungen:
- WO-A1-2006/066339
- WO-A1-2007/021110
- WO-A1-2008/126037
- GB-A- 2 447 024

## Beschreibung

Die Erfindung betrifft einen elektrischen Kaffeevollautomaten, zumindest bestehend aus einem Gehäuse mit einem Wassertank, einer Wasserpumpe, einer Brühgruppe, Bedienelementen, einer elektrischen Steuerung und einem Auffangbehälter für Kaffeereste beziehungsweise Kaffeesatz, gegebenenfalls mit einem Bohnenbehälter und einem Mahlwerk, wobei am Gehäuse oder innerhalb des Gehäuses mindestens eine UV- Lichtquelle angeordnet ist.

Derartige Kaffeevollautomaten sind im Stand der Technik vielfach bekannt. Derartige Kaffeevollautomaten stellen dem Verbraucher eine Vielzahl von Kaffee- Heißgetränken wie beispielsweise Capuccino, Espresso, Kaffee- Latte und ähnliche, vornehmlich aus Kaffee- und Milch-Mix bestehende Getränke zur Verfügung. Hierzu wird in einem derartigen Kaffeevollautomaten in einem Bohnenbehälter Kaffee in Form von Kaffeebohnen bevorratet. Diese werden zur Zubereitung eines Heißgetränkes in einem Mahlwerk gemahlen und anschließend einer Brühgruppe mit einer Brüheinheit zugeführt. Nach Beendigung des Brühvorganges des Heißgetränkes werden die auch Trester genannten Kaffeereste aus der Brühgruppe beziehungsweise Brüheinheit heraus in einen üblicherweise darunter angeordneten Auffangbehälter abgegeben. Hierin verweilen die Kaffeereste bis zur nächsten manuellen Entleerung/Säuberung durch den Benutzer.

Bei unzureichender Reinigung beziehungsweise bei einem längeren Verweilen der Kaffeereste innerhalb des Auffangbehälters kann sich Schimmelpilz bilden. Dieser breitet sich schnell aus und ist zum Teil gesundheitsschädlich. Bei Kaffeevollautomaten der eingangs genannten Art bildet sich bei unzureichender Reinigung der Schimmelpilz auf den Kaffeeresten und/oder auf den mit Kaffeeresten beaufschlagten Teilen des Kaffeevollautomaten.

Bisher konnte die Bildung von Schimmelpilzen innerhalb des Kaffeevollautomaten nur durch die Aufforderung an den Benutzer, die Auffangschale beziehungsweise den Auffangbehälter täglich und gründlich zu reinigen, erfolgen. Dies wird vom Benutzer jedoch häufig vernachlässigt.

Eine weitere Quelle für Pilzbefall kann durch die Kaffeebohnen selbst gebildet sein, da erfahrungsgemäß ein hoher Prozentanteil der Kaffeebohnen Pilzsporen beinhaltet.

Aus der GB 2447024 A ist eine Abgabemaschine für heiße und kalte Getränke bekannt, bei der eine UV- Lichtquelle derart angeordnet ist, dass alle wasserführenden Teile der Maschine oder zumindest einige der wasserführenden Teile der Maschine mit ultravioletten Lichtstrahlen bestrahlt werden können. Hierdurch kann eine Desinfektion des durch die Maschine laufenden wässrigen Mediums erfolgen.

Aufgrund des eingangs genannten Standes der Technik liegt der vorliegenden Erfindung die Aufgabe zugrunde, eine Möglichkeit der Schimmelpilzvernichtung innerhalb des Kaffeevollautomaten zu schaffen, die die Bildung von Schimmelpilz weitestgehend oder ganz verhindert, die dabei kostengünstig und einfach herstellbar ist und eine hohe Lebensdauer aufweist.

Zur Lösung dieser Aufgabe schlägt die Erfindung vor, die UV-Lichtquelle derart angeordnet ist, dass die mit Kaffeesatz oder Kaffeeresten in Kontakt stehenden Teile des Kaffeevollautomaten und / oder die Kaffeereste oder der Kaffeesatz und/oder der Bohnenbehälter und/oder das Mahlwerk mit ultravioletten Lichtstrahlen bestrahlt oder bestrahlbar sind.

Durch die Bestrahlung mit UV- Strahlen der Kaffeereste kann sich der Schimmelpilz gar nicht oder nur deutlich schwächer ausbilden, was der Hygiene sehr zuträglich ist. Somit wird die Bildung von Schimmelpilzen auch bei nachlässiger Reinigung des Kaffeevollautomaten durch den Benutzer weitestgehend vermieden beziehungsweise verhindert. Die UV- Lichtquelle ist dabei derart angeordnet, dass sämtliche Kaffeereste beziehungsweise die mit den Kaffeeresten in Kontakt stehenden Teile des Kaffeevollautomaten mit ultraviolettem Lichtstrahl bestrahlt sind.

Des Weiteren kann durch Bestrahlung des Bohnenbehälters mit UV- Strahlen eine Vernichtung von Schimmelsporen oder dergleichen bezüglich der im Bohnenbehälter befindlichen Kaffeebohnen erreicht werden. Durch Bestrahlung des Mahlwerkes mit UV- Strahlung wird der Inhalt des Mahlwerkes oder auch am Ausgang des Mahlwerkes, also an der Abgabeöffnung des Mahlgutes, eine Vernichtung von Sporen oder Schimmelpilz erreicht.

Insbesondere kann besonders bevorzugt vorgesehen sein, dass die Brühgruppe eine mittels einer Auswurfklappe verschließbare Öffnung zur Abgabe von Kaffeeresten beziehungsweise von Kaffeesatz aufweist, wobei die den Brühraum begrenzende Innenseite der Auswurfklappe in der Offenstellung zur Abgabe der Kaffeereste beziehungsweise des Kaffeesatzes mit ultravioletten Lichtstrahlen bestrahlt ist.

Da insbesondere innerhalb des Brühraumes beziehungsweise an der Innenseite der Auswurfklappe der Brühgruppe nach Beendigung des Brühvorganges Kaffeereste verbleiben können, ist mindestens eine UV- Lichtquelle derart angeordnet, dass die Innenseite der Auswurfklappe in der Offenstellung und der Brühraum mit UV-Licht bestrahlt werden können.

Zudem kann besonders bevorzugt vorgesehen sein, dass zwei UV- Lichtquellen innerhalb des Gehäuses angeordnet sind, wobei die erste UV- Lichtquelle den Inhalt des Auffangbehälters und die zweite Lichtquelle die Innenseite der Auswurfklappe und Teile des Brühraumes der Brühgruppe bestrahlt.

Durch eine derartige Anordnung von zwei UV-Lichtquellen innerhalb des Gehäuses ist eine vollständige oder nahezu vollständige Bestrahlung sowohl der Kaffeereste als auch der Teile der Brüheinheit, die mit Kaffeeresten in Berührung kommen, ermöglicht.

Um einerseits zu ermöglichen, dass die UV-Lichtquellen außerhalb des Mahlwerkes oder außerhalb des Bohnenbehälters oder außerhalb des Bohnenmahlwerkes angeordnet und installiert werden können, aber dennoch eine Bestrahlung mit UV- Strahlen des darin befindlichen Inhaltes ermöglicht ist, ist vorgesehen, dass das Mahlwerk und/oder der Bohnenbehälter mindestens teilweise aus UV- Strahlen durchlässigem Material bestehen und die UV- Lichtquelle außerhalb des jeweiligen Gerätes oder Teiles derart angeordnet und befestigt ist, dass deren Strahlen in das Gerät oder Teil gerichtet sind.

Die entsprechenden UV- Lichtquellen sind innerhalb des Gehäuses nahe des jeweiligen Elementes angeordnet, also nahe des Mahlwerkes oder des Bohnenbehälters, wobei die entsprechenden Bauteile mindestens teilweise aus UV- Strahlen durchlässigem Material bestehen, so das die außenseitig angeordnete UV- Lichtquelle den Inhalt des entsprechenden Geräteteiles bestrahlen und Pilzsporen oder dergleichen vernichten kann.

Je nach Anwendungsweise kann vorgesehen sein, dass mindestens eine UV- Lichtquelle dauernd eingeschaltet ist.

Auch ist es möglich vorzusehen, dass mindestens eine UV- Lichtquelle über den Betriebsschalter des Kaffeevollautomaten ein- und ausschaltbar ist.

Vorzugsweise kann vorgesehen sein, dass mindestens eine UV- Lichtquelle elektronisch gesteuert ein- und ausschaltbar ist, insbesondere zeitgesteuert, vorzugsweise durch die elektronische Steuerung des Kaffeevollautomaten.

Die Steuerung kann in der Weise erfolgen, dass nur dann eine Bestrahlung mit UV- Licht erfolgt, wenn der Kaffeeautomat in Benutzung genommen wird. Sofern der Kaffeevollautomat nicht benutzt ist und sich beispielsweise in eine Standby-Stellung umschaltet, können gleichzeitig die UV-Lichtquellen abgeschaltet werden. Auch eine intermittierende Betriebsweise der UV-Lichtquellen ist möglich, sofern dies als notwendig angesehen wird.

Zudem kann vorgesehen sein, dass die Leistung mindestens einer UV- Lichtquelle einstellbar oder steuerbar ist.

Besonders bevorzugt ist zudem vorgesehen, dass in den Stromkreis mindestens einer UV- Lichtquelle, vorzugsweise aller UV- Lichtquellen, ein Schalter eingeschaltet ist, der durch Öffnung eines das Gehäuse verschließenden Teils, zum Beispiel einer Klappe, den Stromkreis unterbricht.

Durch diese Anordnung wird erreicht, dass die UV-Lichtquellen, die normalerweise durch die Gehäusewandungen des Gehäuses nach außen abgeschirmt sind, dann außer Betrieb gesetzt sind, wenn das Gehäuse geöffnet wird, beispielsweise durch Öffnung einer Installations- oder Wartungsklappe. Es ist somit vermieden, dass ein Benutzer durch UV- Strahlung der UV-Lichtquellen geschädigt wird.

Ein Ausführungsbeispiel ist in der Zeichnungsfigur gezeigt und im Folgenden näher beschrieben.

Es zeigt:

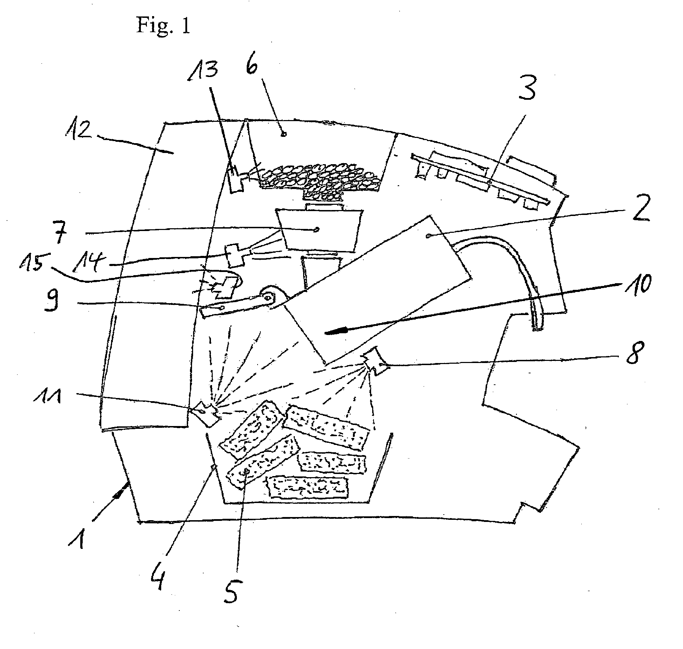

- Figur 1: einen erfindungsgemäßen Kaffeevollautomaten in Seitenansicht geschnitten.

In der Figur ist ein elektrischer Kaffeevollautomat gezeigt. Der elektrische Kaffeevollautomat besteht aus einem Gehäuse 1 mit einer Brühgruppe 2, Bedienelementen, einer elektrischen Steuerung 3 und einem Auffangbehälter 4 für Kaffeereste 5. Im Ausführungsbeispiel weist der Kaffeevollautomat einen Bohnenbehälter 6 und ein Mahlwerk 7 zur Zubereitung von Kaffee- Heißgetränken auf, sowie einen Wassertank 12 und eine Pumpe zum Fördern des Wassers.

Erfindungsgemäß ist innerhalb des Gehäuses 1 mindestens eine UV- Lichtquelle 8,11,13,14,15 derart angeordnet, dass die mit Kaffeesatz beziehungsweise Kaffeeresten 5 in Kontakt stehenden Teile des Kaffeevollautomaten und/oder die Kaffeereste 5 beziehungsweise der Kaffeesatz mit ultravioletten Lichtstrahlen bestrahlt oder bestrahlbar sind und ebenso die im Bohnenbehälter befindlichen Kaffeebohnen, das im Mahlwerk 7 befindliche Mahlgut oder das aus diesem abgegebenen Mahlgut, das im Wassertank 12 befindliche Wasser sowie gegebenenfalls das in einer Verbindungsleitung zwischen Wassertank 12 und Brühgruppe 2 befindliche Wasser.

Die Brühgruppe 2 weist eine mittels einer Auswurfklappe 9 verschließbare Öffnung zur Abgabe von Kaffeeresten 5 auf. Die den Brühraum 10 begrenzende Innenseite der Auswurfklappe 9 ist in der Offenstellung zur Abgabe der Kaffeereste 5 mit ultravioletten Lichtstrahlen bestahlt.

Im Ausführungsbeispiel gemäß Figur 1 sind zwei UV- Lichtquellen 8,11 innerhalb des Gehäuses 1 angeordnet. Die erste UV- Lichtquelle 8 bestrahlt den Inhalt des Auffangbehälters 4 und die zweite Lichtquelle 11 bestrahlt die Innenseite der Auswurfklappe 9 und Teile des Brühraumes 10 der Brühgruppe 2. Somit sind sowohl alle Teile des Kaffeevollautomaten, die mit Kaffeeresten 5 in Berührung kommen, als auch die Kaffeereste 5, die nach dem Auswurf innerhalb des Auffangbehälters 4 angeordnet sind, mit UV- Licht bestrahlt. Somit ist die Bildung von Schimmelpilz innerhalb des Kaffeevollautomaten vollständig oder nahezu vollständig vermieden.

Zusätzlich ist eine UV- Lichtquelle 13 am Bohnenbehälter 6, eine UV- Lichtquelle 14 am Mahlwerk 7 und eine UV- Lichtquelle 15 am Wassertank 12 angeordnet, wobei diese Geräteteile mindestens im Bereich der UV- Strahlen aus Material bestehen, das für die UV- Strahlen durchlässig ist.

Um eine ausreichende Bestrahlung mit UV- Licht zu ermöglichen, sind die UV- Lichtquellen 8,11,13,14,15 mittels der elektrischen Steuerung 3 des Kaffeevollautomaten zeitgesteuert. Hierdurch kann die Zeit der Bestrahlung insbesondere an die Benutzung des Kaffeevollautomaten angepasst werden.

Die Anordnung derartiger UV- Lichtquellen 8,11,13,14,15 innerhalb des Gehäuses 1 des Kaffeevollautomaten stellt eine kostengünstige und einfache Möglichkeit zur Verhinderung von Bildung von Schimmelpilz innerhalb eines Kaffeevollautomaten dar. Insbesondere bei nur nachlässiger Reinigung des Kaffeevollautomaten durch den Benutzer kann somit die Bildung von krankheitserregendem Schimmelpilz innerhalb des Kaffeevollautomaten vollständig oder nahezu vollständig vermieden werden.

Die Erfindung ist nicht auf das Ausführungsbeispiel beschränkt, sondern im Rahmen der Offenbarung vielfach variabel.

## Patentansprüche

1. Elektrischer Kaffeevollautomat, zumindest bestehend aus einem Gehäuse (1) mit einem Wassertank (12), einer Wasserpumpe, einer Brühgruppe (2), Bedienelementen, einer elektrischen Steuerung (3) und einem Auffangbehälter (4) für Kaffeereste (5) beziehungsweise Kaffeesatz, mit einem Bohnenbehälter (6) und einem Mahlwerk (7), wobei am Gehäuse (1) oder innerhalb des Gehäuses (1) mindestens eine UV-Lichtquelle angeordnet ist, **dadurch gekennzeichnet, dass** die UV-Lichtquelle (8,11,13,14) die mit Kaffeesatz oder Kaffeeresten (5) in Kontakt stehenden Teile des Kaffeevollautomaten und / oder die Kaffeereste (5) oder der Kaffeesatz und/oder der Bohnenbehälter (6) und/oder das Mahlwerk (7) mit ultravioletten Lichtstrahlen bestrahlt oder bestrahlbar sind.

2. Elektrischer Kaffeevollautomat nach Anspruch 1, **dadurch gekennzeichnet, dass** die Brühgruppe (2) eine mittels einer Auswurfklappe (9) verschließbare Öffnung zur Abgabe von Kaffeeresten (5) oder von Kaffeesatz aufweist, wobei die den Brühraum (10) begrenzende Innenseite der Auswurfklappe (9) in der Offenstellung zur Abgabe der Kaffeereste (5) oder des Kaffeesatzes mit ultravioletten Lichtstrahlen bestrahlt ist.

3. Elektrischer Kaffeevollautomat nach Anspruch 1 oder 2, **dadurch gekennzeichnet, dass** zwei UV- Lichtquellen (8,11) innerhalb des Gehäuses (1) angeordnet sind, wobei die erste UV- Lichtquelle (8) den Inhalt des Auffangbehälters (4) und die zweite Lichtquelle (11) die Innenseite der Auswurfklappe (9) und Teile des Brühraumes (10) der Brühgruppe bestrahlt.

4. Elektrischer Kaffeevollautomat nach einem der Ansprüche 1 bis 3, **dadurch gekennzeichnet, dass** das Mahlwerk (7) und/oder der Bohnenbehälter (6) mindestens teilweise aus UV- Strahlen durchlässigem Material bestehen und die UV- Lichtquelle (13,14) außerhalb des jeweiligen Gerätes oder Teiles derart angeordnet und befestigt ist, dass deren Strahlen in das Gerät oder Teil gerichtet sind.

5. Elektrischer Kaffeevollautomat nach einem der Ansprüche 1 bis 4, **dadurch gekennzeichnet, dass** mindestens eine UV-Lichtquelle (8,11,13,14) dauernd eingeschaltet ist.

6. Elektrischer Kaffeevollautomat nach Anspruch 1 bis 5, **dadurch gekennzeichnet, dass** mindestens eine UV- Lichtquelle (8, 11, 13, 14) über den Betriebsschalter des Kaffeevollautomaten ein- und ausschaltbar ist.

7. Elektrischer Kaffeevollautomat nach einem der Ansprüche 1 bis 6, **dadurch gekennzeichnet, dass** mindestens eine UV-Lichtquelle (8, 11, 13, 14) elektronisch gesteuert ein- und ausschaltbar ist.

8. Elektrischer Kaffeevollautomat nach einem der Ansprüche 1 bis 7, **dadurch gekennzeichnet, dass** die Leistung mindestens einer UV- Lichtquelle (8,11,13,14) einstellbar oder steuerbar ist.

9. Elektrische Kaffeevollautomat nach einem der Ansprüche 1 bis 8, **dadurch gekennzeichnet, dass** in den Stromkreis mindestens einer UV-Lichtquelle (8,11,13,14), vorzugsweise aller UV- Lichtquellen, ein Schalter eingeschaltet ist, der durch Öffnung eines das Gehäuse (1) verschließenden Teils, zum Beispiel einer Klappe, den Stromkreis unterbricht

## Claims

1. A fully automatic electric coffee maker, at least comprising a housing (1) having a water tank (12), a water pump, a brewing unit (2), controls, an electrical controller (3) and a collecting container (4) for coffee remains (5) or used coffee grounds, a bean container (6) and a grinding assembly (7), at least one UV light source being arranged on the housing (1) or inside the housing (1), **characterized in that** by the UV light source (8, 11, 13, 14), the parts of the fully automatic electric coffee maker in contact with used coffee grounds or coffee remains (5) and/or the coffee remains (5) or the used coffee grounds and/or the bean container (6) and/or the grinding assembly (7) are or can be irradiated with ultraviolet light beams.

2. The fully automatic electric coffee maker according to claim 1, **characterized in that** the brewing unit (2) comprises an opening being closable by means of an ejector flap (9) for discharging coffee remains (5) or used coffee grounds, wherein in the open position for discharging the coffee remains (5) or the used coffee grounds, the inner side of the ejector flap (9) limiting the brewing chamber (10) is irradiated with ultraviolet light beams.

3. The fully automatic electric coffee maker according to claim 1 or 2, **characterized in that** two UV light sources (8, 11) are arranged inside the housing (1), the first UV light source (8) irradiating the content of the collecting container (4) and the second light source (11) irradiating the inner side of the ejector flap (9) and parts of the brewing chamber (10) of the brewing unit.

4. The fully automatic electric coffee maker according to one of claims 1 to 3, **characterized in that** the grinding assembly (7) and/or the bean container (6) are made at least partially of a material being transparent for UV beams, and that the UV light source (13, 14) is arranged and attached outside the respective device or part in such a way that the beams thereof are directed into the device or part.

5. The fully automatic electric coffee maker according to one of claims 1 to 4, **characterized in that** at least one UV light source (8, 11, 13, 14) is permanently turned on.

6. The fully automatic electric coffee maker according to claim 1 to 5, **characterized in that** at least one UV light source (8, 11, 13, 14) can be turned on and off by means of the operating switch of the fully automatic electric coffee maker.

7. The fully automatic electric coffee maker according to one of claims 1 to 6, **characterized in that** at least one UV light source (8, 11, 13, 14) can be turned on and off by electronic control.

8. The fully automatic electric coffee maker according to one of claims 1 to 7, **characterized in that** the power of at least one UV light source (8, 11, 13, 14) can be adjusted or controlled.

9. The fully automatic electric coffee maker according to one of claims 1 to 8, **characterized in that** in the circuit of at least one UV light source (8, 11, 13, 14), preferably of all UV light sources, a switch is included that interrupts the circuit by opening a part closing the housing (1), for instance a flap.

## Revendications

1. Machine à café électrique entièrement automatique au moins comprenant un boîtier (1) présentant un réservoir d'eau (12), une pompe à eau, un module d'infusion (2), des éléments d'actionnement, une commande électrique (3) et un récipient de collecte (4) des restes de café (5) ou du marc de café, un récipient à grains de café (6) et un moulin (7), au moins une source lumineuse UV étant disposée sur le boîtier (1) ou à l'intérieur du boîtier (1), **caractérisée en ce que** par la source lumineuse UV (8, 11, 13, 14), les parties de la machine à café automatique en contact avec le marc de café ou les restes de café (5) et/ou les restes de café (5) ou le marc de café et/ou le récipient à grains de café (6) et/ou le moulin (7) sont irradiés ou peuvent être irradiés par des rayons lumineux ultraviolets.

2. Machine à café électrique entièrement automatique selon la revendication 1, **caractérisée en ce que** le module d'infusion (2) comprend une ouverture refermable au moyen d'un clapet d'éjection (9) pour la libération des restes de café (5) ou du marc de café, dans la position ouverte pour la libération des restes de café (5) ou du marc de café, le côté intérieur du clapet d'éjection (9) limitant la chambre d'infusion (10) est irradié par des rayons lumineux ultraviolets.

3. Machine à café électrique entièrement automatique selon la revendication 1 ou 2, **caractérisée en ce que** deux sources lumineuses UV (8, 11) sont arrangées à l'intérieur du boîtier (1), la première source lumineuse UV (8) irradiant le contenu du récipient de collecte (4) et la deuxième source lumineuse (11) irradiant le côté intérieur du clapet d'éjection (9) et des parties de la chambre d'infusion (10) du module d'infusion.

4. Machine à café électrique entièrement automatique selon une des revendications 1 à 3, **caractérisée en ce que** le moulin (7) et/ou le récipient à grains de café (6) sont au moins partiellement en une matière transparente aux rayons lumineux UV, et que la source lumineuse UV (13, 14) est arrangée et attachée à l'extérieur du dispositif respectif ou de la partie respective d'une telle façon que les rayons lumineux de celle-ci soient dirigés dans le dispositif ou dans la partie.

5. Machine à café électrique entièrement automatique selon une des revendications 1 à 4, **caractérisée en ce qu'**au moins une source lumineuse UV (8, 11, 13, 14) est activée de manière continue.

6. Machine à café électrique entièrement automatique selon la revendication 1 à 5, **caractérisée en ce qu'**au moins une source lumineuse UV (8, 11, 13, 14) peut être activée et désactivée au moyen de l'interrupteur de fonctionnement de la machine à café électrique entièrement automatique.

7. Machine à café électrique entièrement automatique selon une des revendications 1 à 6, **caractérisée en ce qu'**au moins une source lumineuse UV (8, 11, 13, 14) peut être activée et désactivée par commande électronique.

8. Machine à café électrique entièrement automatique selon une des revendications 1 à 7, **caractérisée en ce que** la puissance d'au moins une source lumineuse UV (8, 11, 13, 14) peut être réglée ou commandée.

9. Machine à café électrique entièrement automatique selon une des revendications 1 à 8, **caractérisée en ce que** dans le circuit d'au moins une source lumineuse UV (8, 11, 13, 14), de préférence de toutes les sources lumineuses UV, un interrupteur est intégré, qui interrompt le circuit par l'ouverture d'une partie refermant le boîtier (1), par exemple d'un clapet.
